# EUROPEAN PATENT SPECIFICATION

(11) **EP 1 454 008 B1**
(45) Date of publication and mention of the grant of the patent: **30.08.2006**
(21) Application number: 02767512.3
(22) Date of filing: 09.10.2002
(51) Int. Cl.: D21B 1/32

(54) **METHOD OF SEPARATING COLOURING AGENTS, PARTICULARLY PRINTING INK,FROM RECYCLED FIBRE MATERIAL**
VERFAHREN ZUR ABTRENNUNG VON FARBMITTELN, INSBESONDERE VON DRUCKFARBE, AUS FASERALTMATERIAL
PROCEDE DE SEPARATION D'AGENTS COLORANTS, NOTAMMENT D'ENCRE D'IMPRIMERIE, D'UN MATERIAU FIBREUX RECYCLE

(30) Priority: 10.10.2001 FI 20011973
(43) Date of publication of application: 08.09.2004
(73) Proprietor: Megatrex OY, 33880 Lempäälä (FI)
(72) Inventor: PALM, Carl-Olof, FIN-20100 Turku (FI); VIRTANEN, Hannu, FIN-37830 Viiala (FI); PIRTTINEN, Esa, FIN-02260 Espoo (FI)
(74) Representative: Kaukonen, Juha Veikko
(86) International application number: PCT/FI2002/000792
(87) International publication number: WO 2003/031717

(56) References cited:
- WO-A1-99/54045
- US-A- 5 512 133

## Description

The invention relates to a method of separating colouring agents, particularly printing ink, from recycled fibre material, in which method the recycled fibre material containing a colouring agent is defibered using a liquid, preferably water containing auxiliary chemicals, so that colouring agent contained in the recycled fibre material is separated from the recycled fibre during the defibration, (see for example document WO-A-9 954 045).

Recycled fibre material usually contains different printed matter and other material containing colouring agents, i.e. printing ink or toner, adhering to the recycled fibre material. When treated, recycled fibre material has to be defibered on the one hand, and, on the other hand, colouring agents impeding or preventing the reuse of the recycled fibre, various fillers, wax and glue have to be separated from it to be removed later. Such agents are added during the manufacturing process of paper or paperboard to the surface of the completed web either when making the web, during printing or in another finishing step, or in copying machines and printers.

In known art, recycled fibre material is pulped with water into fibres and, at the same time, colouring agents and other agents are separated from it by generating mechanical impulses in the mixture of water and the recycled material. Besides mechanical treatment, chemicals and, to some degree, heat are used to remove impurities and to affect the separation of certain impurities and the removal of separated impurities in the operational step following the pulping.

A problem in known solutions is that colouring agents are very difficult to be separated from fibres, which diminishes the brightness of the pulp obtained in the defibration. The separation cannot either be significantly enhanced by lengthening the treatment time, since it has been found that a long pulping time (more than 15 minutes) and chemical conditions under which colour is separated diminish the brightness of the pulp. The brightness is diminished partly because the colour particles become too small and penetrate the fibres. The addition of what are known as collector chemicals, by the action of which the colour particles form agglomerates, makes the brightness increase after a few minutes of pulping. The brightness of the pulp continues to increase further as the pulping time increases, but a long pulping time results in the colour agglomerates growing too much, whereby they become visible. The visible colour agglomerates that are not removed in the different steps of the deinking process generally have to be kneaded again into invisibly small particles.

Another weakness in known solutions is that quite much fibre material is lost in flotation, where printing ink and other impurities are removed from the actual pulp. This is at least partly due to the printing ink, waxes, etc. in the fibre being hydrophobic by nature, although the fibres *per se* are hydrophilic. Because of the hydrophobic additives, the fibres attached to them are easily removed from the pulp mixture during flotation, thus causing material loss, which at least partly could be avoided by a good separation method.

The object of the present invention is to provide a method for achieving a more efficient separation of colouring agents than before, and, as a result, a brighter recycled pulp after the removal of the impurities than before. The method of the invention is characterized in that the recycled fibre material and liquid are first applied to a separate pre-breaker, such as a pulper or the like for pre-kneading the recycled fibre material, that the pre-kneaded recycled fibre material together with liquid and gas or a gas mixture, such as air, are applied to a double-action impact mill comprising at least two concentrically rotating rings having impact surfaces and radial openings, such that adjacent rings rotate in opposite directions relative to one another, that the recycled fibre material, the liquid and the gas or the gas mixture are applied in the middle of the rings, from where they are thrown from one impact surface to another, and, by the action of centrifugal force, radially outwards from the middle in such a manner that the substantially continuous material flow applied to the double-action impact mill is broken in the gas into small material flow parts that are finally thrown through the openings between the impact surfaces outside the double-action impact mill, and that the efficient treatment time of the recycled fibre material in the double-action impact mill is at most two seconds, the colouring agent attached to the recycled fibre material being separated from the recycled fibre material as it hits the impact surfaces of the rings, allowing the colouring agent to be removed in further processing from the generated pulp suspension discharged from the double-action impact mill.

An essential idea of the invention is to apply the pre-kneaded recycled fibre material into a double-action impact mill comprising at least two rings that rotate simultaneously and concentrically relative to one another and comprise impact surfaces and radial openings through which the recycled fibre material is conveyed from the middle of the rings radially outwards from the device. It is a further essential idea of the invention that the total treatment time of the recycled fibre material in the device is only seconds, at its maximum at most two seconds, preferably less than one second. It is still a further essential idea of the invention to apply gas or a gas mixture, such as air, to the double-action impact mill, whereby the material flow applied to the double-action impact mill is broken into several separate parts instead of a continuous pulp flow and is thus capable of being thrown freely and loosely from one impact surface to another at a high speed, as a result of which the fibres are subjected to very strong impact pulses and shear forces, and overpressure and underpressure pulses, making the colour particles become efficiently separated from the fibres under such shaking. Furthermore, the essential idea of a preferred embodiment of the invention is to use at most four coaxially arranged rings provided with impact surfaces and openings in the double-action impact mill, whereby the properties of the device ensure that the treatment time remains sufficiently short. According to another preferred embodiment of the invention, chemicals, such as an alkali, e.g. sodium hydroxide, soap, water-glass and hydrogen peroxide, for enhancing the separation of the colouring agent and/or its remaining separated and/or for enhancing further processing are applied to the double-action impact mill simultaneously together with the recycled fibre material and the liquid and the gas.

It is an advantage of the method of the invention that a large number of said strong impulses for separating the colouring agent particles from the actual fibres are directed to the recycled fibre material in a short time, but because of the short treatment time and the openness of the device solution, the colouring agent particles are not ground and kneaded too small, whereby they cannot either easily penetrate the fibres. A further advantage of the method of the invention is that, after the rapid separation step, the colouring agents and the fibre are not subjected to the long-time mixing and kneading taking place in prior art pulpers, and they are not forced by hydraulic pressure into tight gaps, and they thus remain well separated from each other, allowing the colouring agents to be efficiently removed in the separation step after the double-action impact mill by means of flotation or in some other suitable way. Furthermore, the advantage of a preferred embodiment of the method of the invention is that as suitable chemicals are applied to the double-action impact mill simultaneously with the recycled fibre material, they are immediately extremely efficiently mixed with the rest of the material and liquid, and thus immediately affect both the separation of the colouring agent and the accumulation of the separated colouring agent particles into larger agglomerates. This avoids excessive disintegration of the separated printing ink in the treatment, but, on the other hand, as the pulp suspension and its components produced in the double-action impact mill immediately enter the next treatment step after the double-action impact mill, no excessively large agglomerates, which are usually produced due to long treatment times, are generated. A further advantage is that the use of the method of the invention allows the same or even a more efficient effect of chemicals on the separation of the colouring agent and its staying separated to be achieved with significantly smaller chemical amounts than in prior art solutions. Still an advantage of the method of the invention is that, in this way, the energy fed into the double-action impact mill can efficiently and in a short time be directed to the disintegrated mass flow, whereby it is subjected to transient strong energy pulses, as a result of which the colouring agent is effectively separated from the fibres, but, because of the short treatment time, is not subjected to a long-term energy effect and thus easily remains separate from the fibre.

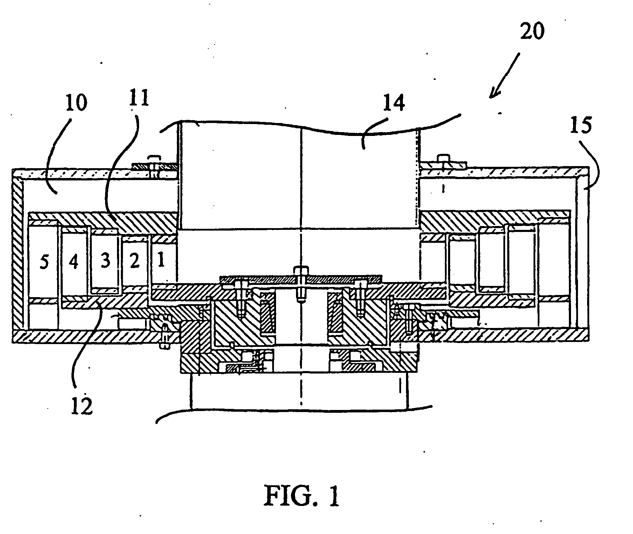

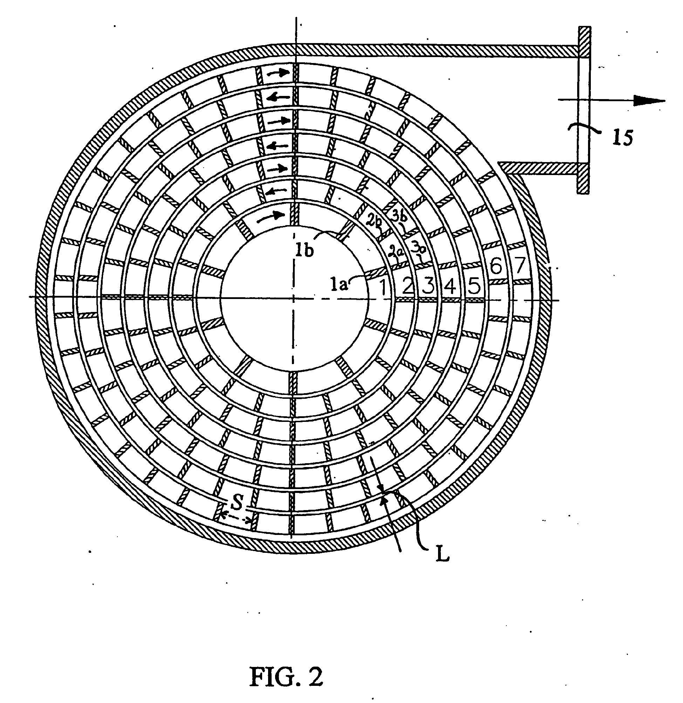

The invention is described in detail in the attached drawings, where Fig. 1 and Fig. 2 are a side view and a cross-sectional top view, respectively, of a double-action impact mill suitable for implementing the method of the invention, and
Fig.3 to Fig. 5 show the results obtained in laboratory tests performed, and
Fig. 6 shows a schematic process for treating recycled fibre material using the method of the invention.
Fig. 1 and Fig. 2 are a side view and a cross-sectional top view, respectively, of a double-action impact mill suitable for implementing the method of the invention.

Fig. 1 is a vertical section of a double-action impact mill 20 used in the method of the invention and comprising a housing 10, inside which is arranged a rotor 11 provided with impact surfaces 1a, 1b..., 3a, 3b... etc. Figure 2 shows the individual impact surfaces in detail. Inside the housing is also arranged a second rotor 12, which is concentric with the first rotor 11. The second rotor 12 is also provided with impact surfaces 2a, 2b..., 4a, 4b..., etc. The impact surfaces 1a, 1b..., 2a, 2b..., 3a, 3b... of the first rotor 11 and the second rotor 12 are arranged in concentric rings 1, 2, and 3... such that the rings 1, 3, 5 of the first rotor 11 and the rings 2, 4 of the second rotor 12 overlap. This allows the rotors 11 and 12 and their impact surfaces to freely rotate concentrically in different directions.

The end of the housing is provided with a hole 14 that opens into the centre of the rotors 11 and 12 and acts as a feed inlet for pre-kneaded recycled fibre material. The wall of the housing is provided with an opening hole 15 acting as an outlet opening tangentially to the outermost impact surface ring.

The second rotor 12 may also be replaced with a stator provided with impact surfaces, but a solution comprising two rotors is preferable. The rotors, rotating in opposite directions, produce strong centrifugal forces, which efficiently maintain the material flow in motion, which a stator/rotor system does not equally efficiently achieve.

Fig. 2, showing the device of the type of Fig. 1 as a horizontal cross-section (modified such that both rotors 11, 12 have one ring more than the device of Figure 1), shows the directions of rotation of the rotors. Naturally, both rotors may also rotate in the opposite direction, as long as the outermost ring rotates in the direction of the tangentially arranged outlet opening.

According to the solution of Fig. 2, the horizontal distance L between the rings 1, 2, 3... is about 3 mm and the same between all rings. According to a preferred embodiment, not shown in the figure, the device is built or adjusted such that the distance L between adjacent rings decreases towards the outermost ring 7 of the device. The distance L between the outermost rings 6 and 7 is preferably about 0.2 mm.

According to a preferred embodiment, the device is built such that the distance S between the impact surfaces of the outermost rings is less than the distance between the impact surfaces of the inner rings.

The above measures ensure that coarser fibrous material can also be applied to the device, and nevertheless achieve sufficiently defibrated pulp. The essential advantage is that the number of impact surfaces in the rotor rings and the distances (tightness) between the rings are selected according to the need. The distance between the rings and the distance between the impact surfaces in the rings can be arranged to become smaller towards the outer ring. In this way, the dispersing coarse recycled fibre material, when being kneaded, preferably ends up in a tighter space before being discharged from the device. However, an essential idea of the invention is not to force the recycled fibre material into very tight gaps and compression, but to make the double-action impact mill operate fundamentally such that the recycled fibre material hits the impact surfaces and is thrown from the radial openings forward and finally out from the device. The ring wall of the housing of the double-action impact mill does not have to be in the immediate vicinity of a rotor pair, correspondingly rotor/stator, but may be located further from there, i.e. the housing can be quite loose. In this case, the function of the housing is mainly to act as a receiver for the pulp suspension produced.

When recycled fibre material and liquid are applied to the double-action impact mill as a substantially continuous material flow in the middle thereof inside the rotating rotor rings, it hits the impact surfaces of the inner rotor ring. By the action of their impacts, it is disintegrated into several smaller pulp flow parts, which are thrown peripherally in the direction of rotation of the ring, but at the same time, by the action of centrifugal force, radially upwards, thus ending up before the impact surfaces of the next ring and, as a result, being thrown in the opposite direction. The splitting of the recycled fibre material flow into small parts that are thrown through the double-action impact mill from one impact surface to another results in that energy efficiently affects the fibres and the colouring agent particles, whereby the entire recycled fibre material is subjected to a substantially equal amount of energy and a similar treatment as it is thrown from one impact surface of the double-action impact mill to another, and further, out from the double-action impact mill. This is a substantially significant difference as compared with prior art, where the energy pulses in the pulp mixture circulating in a large keeve are very unevenly and randomly directed to the material being defibered and, as a result, the colouring agent is poorly separated and disintegrated into unnecessarily small particles thus impairing the brightness of the obtained pulp. The treatment time of recycled fibre material in a double-action impact mill is at most two seconds, preferably at most one second. This treatment time is the time from the feeding of the material to the double-action impact mill to the time when the material is thrown from the outermost rotor ring outside thereof.

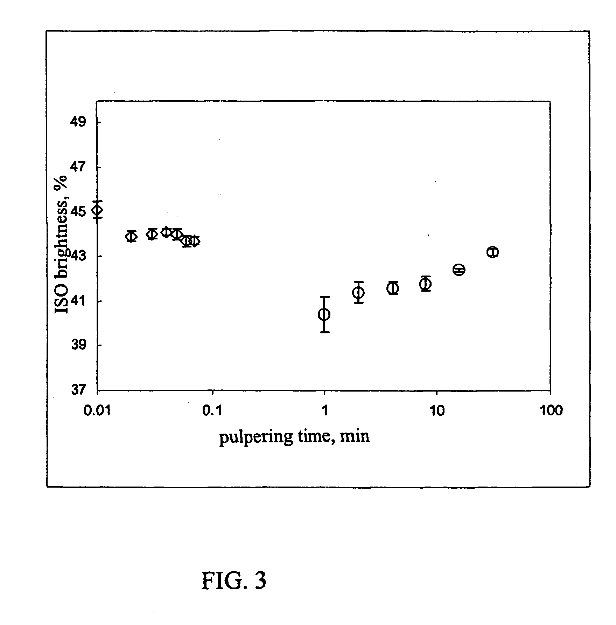

Fig. 3 to Fig. 5 show the test results obtained by the method of the invention using a Lamort type of laboratory pulper in the comparison. In the test, 17-days old newspaper paper was pulped using a Lamort pulper, from which reference values were obtained, and the test run was carried out the next day by the method of the invention. In the test run, the consistency was at first 8%, and was lowered to 4% for pumping in order for the pulp to be pumped, since the first treatment made the pulp swell strongly. The temperature in the test was 55°C and the pH 10.3. The test run included two test series, in the first of which the pre-kneaded pulp mixture was run seven times through a double-action impact mill comprising four rings at nearly maximum rotations and the second run was carried out using a speed of ¼ (40 1/s) from the first test series and without the outermost ring of the double-action impact mill. Sheets were made from the pulp by diluting the pulp first in the ratio 1:30 and by filtering it in a Buhner funnel on a wire onto filter paper. The filtered sheets were rolled onto gloss plates, allowing the size distribution of the ink particles to be determined. The ISO brightness of the sheets was measured with an Elrepho 2000 device.

Fig. 3 shows the brightness of super-washed pulps as a function of treatment time, treated by means of the method of the invention and with a reference pulper (Lamort), respectively. In the figures, the diamonds present the results obtained by the method of the invention using a double-action impact mill and the round circles, in turn, present the average results obtained with a reference pulper. In this test, the double-action impact mill was used at a high operating speed (about 160 1/s) including all rotors, i.e. two pairs of rotors rotating in opposite directions, adjacent rotors rotating in opposite directions. The treatment time with the double-action impact mill is presented as the number of treatment times, since the passing time during each treatment time was the same and, consequently, the total treatment time is directly proportional to the number of treatment times. Correspondingly, the treatment time with the reference pulper (Lamort) is directly presented on a time line segment.

As the figure shows, the brightness of super-washed sheets obtained by the method of the invention is higher than any brightness value obtained with the reference pulper. However, one is able to also note that the highest brightness value was obtained by the method of the invention using the shortest time, i.e. one treatment time of about one second. In the next treatment times, i.e. as the treatment time became longer, the brightness value fell by the method of the invention although it still remained clearly higher than any value obtained with the reference pulper.

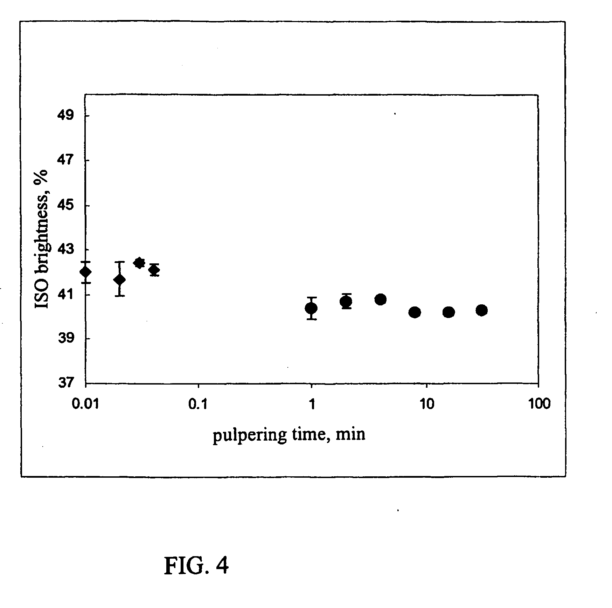

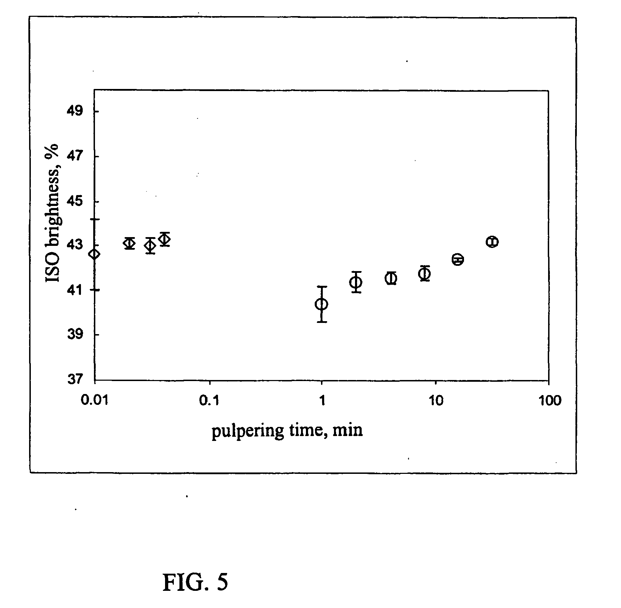

Fig. 4 shows the brightness values obtained with the method of the invention and the brightness values obtained with the reference pulper when a slow (40 1/s) operating speed was used without the outermost ring. The reason for this was that as the first test showed that too much energy was used, the aim was to find circumstances under which the result would be even slightly imperfect. The process again involved repeating the feed of test material through the double-action impact mill, whereby the energy applied per pulp unit increased each time by the amount of energy required by one pass. In this case, it was noted that after the first and second treatment, the recycled fibre material was not yet fully defibered, but bits could still be found therein. The remaining bits were not defibered until during the third and fourth treatment. However, deinking was so efficient that the same brightness was obtained in this case using four treatment times as with the reference pulper during 32 minutes, as Fig. 5 shows. In practice, in prior art, the normal pulping time has been about ten minutes, whereas, also in this case, a similar deinking was achieved by the method of the invention during a treatment time of less than five seconds. It may further be noted that there is a clear difference between brightness and defibration when the method of invention and known pulping methods are used, since in the method of the invention, the brightness was higher after the first treatment time, i.e. after a treatment time of less than two seconds, in spite of only partial defibration, than the result obtained in the reference pulper during normal pulping, where the material treated by the reference pulper was fully defibered.

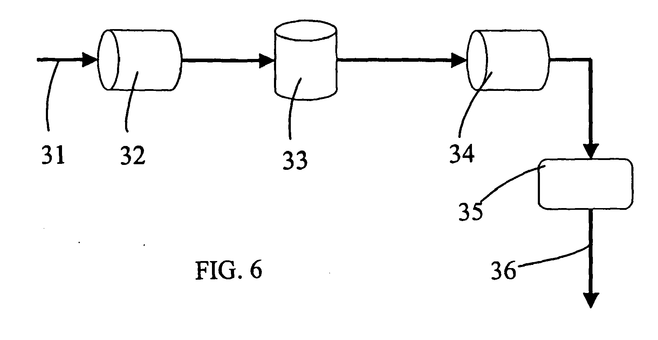

Fig. 6 schematically shows a process for treating recycled fibre material using the method of the invention. The figure shows a process diagram wherein recycled fibre material, water and air, optionally with chemicals, are applied into a pulper 32 in the manner shown by arrow 31. The pulper 32 may be any pulper known per se, which in this example is schematically shown as a drum pulper. From the pulper 32, the pre-kneaded recycled fibre material and the liquid with the substances therein are conveyed to a double-action impact mill 33, where colouring agent is separated from the recycled fibre material. From the double-action impact mill 33, the recycled fibre material is conveyed into an agglomeration device 34, which may be of the drum type or any other suitable device for treating the pulp suspension produced in order for the colouring agent to be agglomerated into particles of a suitable size. From the agglomeration device 34, the pulp suspension is conveyed forward to flotation 35, wherein ink is separated and removed from the pulp suspension in a manner completely known per se by means of air or some gas, after which the pulp suspension obtained is conveyed forward in the manner shown by arrow 36 to be used in a suitable manner.

The method of the invention may be enhanced by adding suitable auxiliary chemicals into the double-action impact mill together with the recycled fibre material, which act on the recycled fibre material and the colouring agent therein at the same time as the recycled fibre material is subjected to mechanical separation in the double-action impact mill. The disintegration of the substantially continuous pulp flow applied into the double-action impact mill into small flow parts as it hits the impact surfaces of the first rotor ring and is thrown from there forward in order to hit the impact surfaces in the following ring results also in that the chemical applied simultaneously into the double-action impact mill also efficiently acts on the small pulp flow parts, thus enhancing the effect of the chemicals. The addition of an alkali to the recycled fibre material as an additive makes the action on the fibres, such as swelling and deinking, take place as advantageously as possible. Similarly, the use of a collector chemical, such as soap, as an additive enhances deinking in soft water, but the addition of soap in hard water causes an opposite reaction, wherefore the use of soap always depends on the circumstances. Furthermore, water-glass or hydrogen peroxide may be preferably used as an additive, by the action of which the colouring agent separated can be better made remain separate from the fibres. The chemicals may naturally also include various chemicals typically used in finishing and required for flotation, whereby the energy amounts required for their use are simultaneously obtained in connection with separating the colour particles. Accordingly, in some embodiments, the pulp suspension produced in the double-action impact mill may be discharged as foamed and thus better suited to finishing. It is advantageous to apply these additives together with the pre-kneaded recycled fibre material dissolved in water in order for their effect on the process to be as efficient as possible as the recycled fibre material is thrown from one impact surface of the double-action impact mill to another.

Furthermore, when the invention is applied, it is evident that when pre-kneaded recycled fibre material and optional additives are applied to a double-action impact mill, gas and/or steam may also be applied to maintain a sufficient amount of gas/steam inside the double-action impact mill to break the continuous flow into small loose pulp flow parts, wherein the separated colour particles also better remain separated from the fibres.

In the above specification and in the drawings the invention is described only by way of example, and is in no way restricted to it. It is essential to apply the pre-kneaded recycled fibre material into a double-action impact mill which comprises at least two rings provided with impact surfaces and radial openings and rotating in opposite directions and which contains gas or steam so as to make the recycled fibre material hit the impact surfaces and be thrown radially outward to be discharged from the double-action impact mill, so that its total treatment time in the double-action impact mill is at most two seconds.

## Claims

1. A method of separating colouring agents, particularly printing ink, from recycled fibre material, in which method the recycled fibre material containing a colouring agent is defibered using a liquid, preferably water containing auxiliary chemicals, so that colouring agent contained in the recycled fibre material is separated from the recycled fibre during the defibration, **characterized in that** the recycled fibre material and liquid are first applied to a separate pre-breaker, such as a pulper (32) or the like for pre-kneading the recycled fibre material, that the pre-kneaded recycled fibre material together with liquid and gas or a gas mixture, such as air, are applied to a double-action impact mill (20,33) comprising at least two concentrically rotating ring (1-7) having impact surfaces and radial openings, such that adjacent rings (1-7) rotate in opposite directions relative to one another, that the recycled fibre material, the liquid and the gas or the gas mixture are applied in the middle of the rings (1-7), from where they are thrown from one impact surface to another, and, by the action of centrifugal force, radially outwards from the middle in such a manner that the substantially continuous material flow applied to the double-action impact mill (20,33) is broken in the gas into small material flow parts that are finally thrown through the openings between the impact surfaces outside the double-action impact mill (20, 33), and that the efficient treatment time of the recycled fibre material in the double-action impact mill (20,33) is at most two seconds, the colouring agent attached to the recycled fibre material being separated from the recycled fibre material as it hits the impact surfaces of the rings (1-7), allowing the colouring agent to be removed in further processing from the generated pulp suspension discharged from the double-action impact mill (20, 33).

2. A method as claimed in claim 1, **characterized in that** the efficient treatment time of the recycled fibre material in the double-action impact mill (20, 33) is at most one second.

3. A method as claimed in claim 1 or 2, **characterized in that** , the double-action impact mill (20, 33) comprises at most four coaxially arranged rings (1-7).

4. A method as claimed in any one of the preceding claims, **characterized in that** chemicals for enhancing the separation of the colouring agent and/or its remaining separated and/or for enhancing further processing are applied to the double-action impact mill (20, 33) simultaneously together with the recycled fibre material.

5. A method as claimed in claim 4, **characterized in that** one of the chemicals applied is an alkali, such as for example sodium hydroxide.

6. A method as claimed in claim 4 or 5, **characterized in that** at least one of the chemicals applied is a collector chemical, such as soap.

7. A method as claimed in any one of claims 4 to 6, **characterized in that** one of the chemicals applied is water-glass.

8. A method as claimed in any one of claims 4 to 7, **characterized in that** one of the chemicals applied is hydrogen peroxide.

## Patentansprüche

1. Verfahren zur Abtrennung von Farbmitteln, insbesondere von Druckfarbe, aus Faseraltmaterial, bei dem das Faseraltmaterial, das ein Farbmittel enthält, unter Verwendung einer Flüssigkeit, vorzugsweise Hilfschemikalien enthaltendem Wasser, entfasert wird, so dass in dem Faseraltmaterial enthaltene Farbmittel von dem Faseraltmaterial während der Entfaserung abgetrennt wird, **dadurch gekennzeichnet, dass** das Faseraltmaterial und Flüssigkeit zuerst auf einen getrennten Vorbrecher, wie z. B. einen Pulper (32) oder ähnlichem zum Vorzerfasern des Faseraltmaterials geführt wird, dass das vorzerfaserte Faseraltmaterial zusammen mit Flüssigkeit und Gas oder einem Gasgemisch, wie z. B. Luft, zu einer doppelt wirkenden Prallmühle (20, 33) mit wenigstens zwei konzentrisch rotierenden Ringen (1-7) mit Pralloberflächen und radialen Öffnungen zugeführt wird, so dass nebeneinander liegende Ringe (1-7) sich in entgegengesetzter Richtung zueinander drehen, dass das Faseraltmaterial, die Flüssigkeit und das Gas oder das Gasgemisch in die Mitte der Ringe (1-7) aufgegeben werden, von wo sie von einer Prallfläche auf die andere geschleudert werden und durch die Wirkung der Zentrifugalkraft radial von der Mitte auswärts auf solche Weise geschleudert werden, dass der im wesentlichen kontinuierliche Materialfluss der der doppelt wirkenden Prallmühle (20, 33) zugeführt wird, in dem Gas in kleine Materialflussteile gebrochen wird, die am Schluss durch die Öffnungen zwischen den Prallflächen von der doppelt wirkenden Prallmühle (20, 33) nach außen geworfen werden, und dass die wirksame Behandlungszeit (Verweilzeit) des Faseraltmaterials in der doppelt wirkenden Prallmühle (20, 33) höchstens zwei Sekunden beträgt, wobei das Farbmittel, das an dem Faseraltmaterial haftet, von dem Faseraltmaterial abgetrennt wird, wenn es auf die Prallflächen der Ringe (1-7) auftrifft, was die Entfernung des Farbmittels in weiterem Verfahren aus der erzeugten Pulpensuspension, die von der doppelt wirkenden Prallmühle (20, 33) abgelassen wird, ermöglicht.

2. Verfahren nach Anspruch 1, **dadurch gekennzeichnet, dass** die wirksame Behandlungszeit (Verweilzeit) des Faseraltmaterials in der doppelt wirkenden Prallmühle (20, 33) höchstens eine Sekunde beträgt.

3. Verfahren nach Anspruch 1 oder 2, **dadurch gekennzeichnet, dass** die doppelt wirkende Prallmühle (20, 33) höchstens 4 coaxial angeordnete Ringe (1-7) aufweist.

4. Verfahren nach einem der vorhergehenden Ansprüche, **dadurch gekennzeichnet, dass** Chemikalien zur Verstärkung der Abtrennung des Farbmittels und/oder seines Abgetrenntbleibens und/oder zur Verstärkung weiterer Verarbeitung der doppelt wirkenden Prallmühle (20, 33) gleichzeitig mit dem Faseraltmaterial zugeführt werden.

5. Verfahren nach Anspruch 4, **dadurch gekennzeichnet, dass** eine der zugeführten Chemikalien ein Alkali, wie z. B. Natriumhydroxid, ist.

6. Verfahren nach Anspruch 4 oder 5, **dadurch gekennzeichnet, dass** wenigstens eine der zugeführten Chemikalien ein Flotationsmittel, wie z. B. Seife, ist.

7. Verfahren nach einem der Ansprüche 4 bis 6, **dadurch gekennzeichnet, dass** eine der angewandten Chemikalien Wasserglas ist.

8. Verfahren nach einem der Ansprüche 4 bis 7, **dadurch gekennzeichnet, dass** eine der angewandten Chemikalien Wasserstoffperoxid ist.

## Revendications

1. Procédé de séparation d'agents colorants, en particulier d'encre d'impression, à partir de matériau fibreux recyclé, dans lequel procédé le matériau fibreux recyclé contenant un agent colorant est défibré en utilisant un liquide, de préférence de l'eau contenant des produits chimiques auxiliaires, de telle sorte que l'agent colorant contenu dans le matériau fibreux recyclé est séparé de la fibre recyclée au cours du défibrage, **caractérisé en ce que** le matériau fibreux recyclé et le liquide sont tout d'abord appliqués à un prémalaxeur séparé, tel qu'un désintégrateur (32) ou similaire permettant de prémalaxer le matériau fibreux recyclé, **en ce que** le matériau fibreux recyclé prémalaxé conjointement avec du liquide et du gaz ou un mélange gazeux tel que de l'air, sont appliqués à un mélangeur à disques à double action (20, 33) comprenant au moins deux anneaux (1-7) tournant de manière concentrique ayant des surfaces d'impact et des ouvertures radiales, de telle sorte que les anneaux adjacents (1-7) tournent dans des sens opposés l'un par rapport à l'autre, **en ce que** le matériau fibreux recyclé, le liquide et le gaz ou le mélange de gaz sont appliqués au centre des anneaux (1-7), à partir desquels ils sont projetés d'une surface d'impact à l'autre, et sous l'effet de la force centrifuge, sont orientés radialement vers l'extérieur à partir du centre de telle sorte que le flux de matériau sensiblement continu appliqué au mélangeur à disques à double action (20, 33) est fractionné dans le gaz en petits éléments de flux de matériau qui sont enfin projetés au travers des ouvertures entre les surfaces d'impact à l'extérieur du mélangeur à disques à double action (20, 33), et **en ce que** la durée de traitement efficace du matériau fibreux recyclé dans le mélangeur à disques à double action (20, 33) est au plus de deux secondes, l'agent colorant fixé au matériau fibreux recyclé étant séparé du matériau fibreux recyclé lorsqu'il heurte les surfaces d'impact des anneaux (1-7), ce qui permet à l'agent colorant d'être éliminé lors du traitement supplémentaire à partir de la suspension de pâte générée évacuée du mélangeur à disques à double action (20, 33).

2. Procédé selon la revendication 1, **caractérisé en ce que** la durée de traitement efficace du matériau fibreux recyclé dans le mélangeur à disques à double action (20, 33) est au plus d'une seconde.

3. Procédé selon la revendication 1 ou 2, **caractérisé en ce que** le mélangeur à disques à double action (20, 33) comprend au plus quatre anneaux (1-7) agencés coaxialement.

4. Procédé selon l'une quelconque des revendications précédentes, **caractérisé en ce que** les produits chimiques permettant d'améliorer la séparation de l'agent colorant et/ou son maintien dans l'état de séparation et/ou l'amélioration de la suite du traitement sont appliqués au mélangeur à disques à double action (20, 33) simultanément avec le matériau fibreux recyclé.

5. Procédé selon la revendication 4, **caractérisé en ce que** l'un des produits chimiques appliqués est un alcali, par exemple de l'hydroxyde de sodium.

6. Procédé selon l'une quelconque des revendications 4 ou 5, **caractérisé en ce qu'**au moins l'un des produits chimiques appliqués est un produit chimique collecteur, tel qu'un savon.

7. Procédé selon l'une quelconque des revendications 4 à 6, **caractérisé en ce que** l'un des produits chimiques appliqués est du silicate de sodium.

8. Procédé selon l'une quelconque des revendications 4 à 7, **caractérisé en ce que** l'un des produits chimiques appliqués est du peroxyde d'hydrogène.
